# EUROPEAN PATENT SPECIFICATION

(11) **EP 4 063 649 B1**
(45) Date of publication and mention of the grant of the patent: **22.11.2023**
(21) Application number: 21164705.2
(22) Date of filing: 24.03.2021
(51) Int. Cl.: F03D 15/00, F03D 80/50, F03D 80/70, F16C 43/04, F16H 57/02, F16H 1/46, F16H 37/04, F16H 57/023, F16H 57/08, F16H 57/00, F16H 57/021

(54) **RETROFITTING OF WIND TURBINES**
NACHRÜSTUNG VON WINDTURBINEN
RÉTROMONTAGE D'ÉOLIENNES

(43) Date of publication of application: 28.09.2022
(73) Proprietor: Multigear GmbH, 56743 Mendig (DE)
(72) Inventor: OEBEL, Achim, 56743 Mendig (DE)
(74) Representative: Richardt Patentanwälte PartG mbB

(56) References cited:
- US-A1- 2010 133 854
- US-A1- 2016 238 125

## Description

### Field of the invention

The invention relates to wind turbines, in particular to the gearboxes of wind turbines.

### Background and related art

Wind turbines are an environmentally friendly energy source. The force of wind on propellers or blades is used to drive a generator which produces electricity. The large wind turbines used in wind farms typically have the capacity to generate power on the order of 1 MWh a year with a an average wind speed of 6 m/s. The propellers rotate slowly, but are massive. They have an extremely large torque by operate at relatively slow rotational speed. Generators are typically more efficient when operated using a lower torque with an increased rotation rate or speed.

A gear box may be placed between the rotor blades and the generator to transform the higher torque and slower rotation speed to a lower torque and higher rotation speed. A point of failure in gear boxes are bearings. A wind turbine may be in service for multiple decades. Over its useful service life, the gears may need to be replaced multiple times and may be a major expense in maintaining a wind turbine.

United States patent application publication US 2016/0238125 A1 discloses a lubrication system for a gearbox that is part of a drivetrain assembly, e.g. of a wind turbine. The lubrication system includes a ring assembly having a first ring and a detached, second ring. The first and second rings are configured to fit within a gap located between a planetary gear system and a gearbox housing of the gearbox, e.g. due to operational and/or system tolerances. When installed, the first and second rings of the ring assembly are arranged together so as to form at least one opening therebetween, thereby being configured to direct a lubricant from the gearbox housing to the planetary gear system.

United States patent application publication US 2010/0133854 A1 discloses a drive train for a wind turbine. The wind turbine includes a rotor connected to a low speed shaft, and a low speed shaft connected to a gearbox. The gearbox has a high speed shaft connected to a generator. The drive train includes a bearing interposed between the gearbox and the generator. A gearbox lubrication medium is at least partially contained within the gearbox, and the bearing shares the gearbox lubrication medium with the gearbox.

### Summary

The invention provides for a method and a retrofitted wind turbine in the independent claims. Embodiments are given in the dependent claims.

There are different configurations for gear boxes which are used in wind turbines. A common type of gear box has three stages: a low-speed stage formed from a first planetary gear, an intermediate stage formed from a second planetary gear, and a high-speed stage formed from a parallel axis gear. Each successive stage reduces the torque and increases the rotation rate. This gearbox has an axial roller bearing and a cylindrical roller bearing between the intermediate stage and the high-speed stage. These two bearings may for example be a bearing which supports a shaft or mechanical connection going from the second planetary gear to the parallel axis gear.

The axial roller bearing and the cylindrical roller bearing have the potential to be a point of failure for the gearbox. As the wind blows an axial force is transmitted through the gearbox and in particular to the axial roller bearing. This can result in the axial roller bearing wearing prematurely and causing the gearbox to fail requiring expensive maintenance and downtime.

Embodiments may provide with a means of providing for a more reliable bearing between the intermediate stage and the high-speed stage of the gearbox. This may be achieved by removing both the cylindrical roller bearing and the axial roller bearing and replacing the two bearings with a single-row tapered roller bearing. The axial roller bearing may be installed into a location that at least partially comprises the location at which the cylindrical roller bearing was installed. The single-row tapered roller bearing may be able to better bear the axial forces than the axial roller bearing and may therefore extend the time before it is necessary to replace or rebuild the gearbox.

In some examples the cylindrical roller bearing has a larger diameter than the axial roller bearing. The single-row tapered roller bearing may therefore also have a larger diameter than the axial roller bearing also. This increase in diameter may help the single-row tapered roller bearing to better bear the axial forces and may result in extended the useful life of the gearbox.

In addition, the axial roller bearing may be difficult to inspect. Replacing the axial roller bearing with the single-row tapered roller bearing may make it easier to inspect and therefore maintain the gearbox.

In one aspect the invention provides for a method of retrofitting a wind turbine. A wind turbine as used herein encompasses a turbine or generator which is powered by wind and is used to produce electricity. The wind turbine comprises a gearbox. Wind turbines may be elevated using a tower and rotor blades may be used to drive a main shaft or low-speed shaft. The wind power provides a relatively low-speed but high torque. The gearbox is used to transfer the low-speed and high torque into a higher speed and lower torque. This is more useful for driving a generator.

The gearbox comprises a low-speed stage formed from a first planetary gear. The gearbox further comprises an intermediate stage formed from a second planetary gear. The gearbox further comprises a high-speed stage formed from a parallel axis gear. The low-speed stage is configured for driving the intermediate stage and the intermediate stage is further configured for driving the high-speed stage. Each of the stages is used to increase the speed and reduce the torque. The low-speed stage may for example be connected to the low-speed or main shaft which is driven by the rotor blades. The high-speed stage may for example be connected to the generator. There may be intermediate components such as a mechanical brake and/or fluid coupling that are used to connect the high-speed stage to the generator. The parallel axis gear of the high-speed stage, may for example be a straight gear or a helical gear.

The gearbox further comprises a cylindrical roller bearing between the intermediate stage and the high-speed stage. The gearbox further comprises an axial roller bearing between the intermediate stage and the high-speed stage. The cylindrical roller bearing and the axial roller bearings are coaxial with an intermediate stage axis. The intermediate stage axis may be the axis for rotation for the second planetary gear. For example it could be the axis of the sun gear of the second planetary gear. The axial roller bearing is attached at an axial roller bearing mounting location. The cylindrical roller bearing is attached at a cylindrical roller bearing mounting location. The axial roller bearing mounting location and the cylindrical roller bearing mounting location may be connected to the output of the intermediate stage. In some examples this could be an intermediate stage output shaft. In other examples it could be part of the second planetary gear.

The method comprises removing the cylindrical roller bearing from the cylindrical roller bearing mounting location. The method further comprises removing the axial roller bearing from the axial bearing mounting location. The method then further comprises installing a single-row tapered roller bearing at a tapered roller bearing mounting location. The tapered roller bearing mounting location at least partially comprises the cylindrical roller bearing mounting location. So in other words the tapered roller bearing mounting location is installed at least partially at the location where the cylindrical roller bearing mounting location was.

Performing the method results in a retrofitted wind turbine being provided. The replacement of the axial roller bearing and the cylindrical roller bearing by a single-row tapered roller bearing has a number of advantages. One advantage is that the number of bearings has been reduced. Therefore the number of parts to inspect and thereby maintenance expenses may be reduced. Another advantage is that it is relatively straightforward to inspect the single-row tapered roller bearing. Bearings such as the axial roller bearing in particular may be difficult to inspect. The use of the single-row tapered roller bearing may then make it easier and more cost-effective to maintain the retrofitted a wind turbine. Another advantage is that when the wind blows into the windmill it exerts force in a direction that is parallel to the intermediate stage axis. This has the effect of putting a large degree of force on the axial roller bearing in particular. Often times the single-row tapered roller bearing may bear the stress put on the wind turbine by the wind better than the axial roller bearings.

The tapered roller bearing has a taper and the side with the smaller diameter is referred to herein as the narrow end. In an embodiment the narrow end is towards the direction of the electrical generator. The positioning of the single-row tapered roller bearing in this way may have several advantages. One advantage is that as the wind blows on the windmill and forces are transmitted to the output of the intermediate stage of the gearbox the single-row tapered roller bearing has the effect of centering the output of intermediate stage. This may have the effect of further reducing the wear and tear on the gearbox.

In another embodiment the cylindrical roller bearing mounting location and the axial roller bearing mounting location are attached to the output of the intermediate stage. The method further comprises machining the cylindrical roller bearing mounting location to provide the tapered roller bearing mounting location. In some particular examples it may be possible to directly replace the cylindrical roller bearing with the single-row tapered roller bearing. In some other designs there may not be enough clearance to install the single-row tapered roller bearing. In this case, the output of the intermediate stage can be taken and then machined to provide more clearance for the single-row tapered roller bearing.

In another embodiment, the gearbox is preferably configured such that it generates an axial force at the output of the intermediate stage, along the intermediate stage from the high-speed stage, and in a direction traveling from the low speed stage towards the intermediate stage in response to a rotation of the high-speed stage. For example the gears of the gear box may be cut such that when the propeller of the turbine rotate they cause an axial force in this direction. This may be beneficial because it may be used to keep a constant force on the single-row tapered roller bearing. This may ensure that the single-row tapered roller bearing is not pulled apart or damaged.

In another embodiment the method further comprises installing a reinforcement spacer in the axial roller bearing mounting location. If the axial roller bearing is removed and then the single-row tapered roller bearing is installed then the forces which are experienced at the output of the intermediate stage may change. For example, the single-row tapered roller bearing may exert forces on the walls of the axial roller bearing mounting location. If the forces are too large or over a period of time this may cause a breakage or a failure. This may be particularly true if the cylindrical roller bearing mounting location was machined from the cylindrical roller bearing mounting location. The reinforcement spacer may provide a means of reducing damage or fatigue to this location in the gearbox.

In another embodiment the reinforcement spacer is installed using an interference fit. In an interference fit the diameter or size of the material being inserted into another one is larger than the clearance. The heating of the piece receiving and/or cooling of the piece that is being inserted may be one means in order to assemble them. An interference fit may be beneficial because it may reduce the movement of the reinforcement spacer and thereby cause it to better reinforce the axial roller bearing mounting location. In an example, the axial bearing mounting location is heated. In another example, the reinforcement spacer is cooled. In another example, the axial bearing mounting location is heated and the reinforcement spacer cooled. It may be beneficial to cool the reinforcement spacer because it may make it easier to install into the axial bearing mounting location. Since the reinforcement spacer is small in comparison to the gearbox it may be easy to cool it. In one example the reinforcement spacer is cooled such that there is a temperature differential of at least 90° Celsius between the reinforcement spacer and the gearbox. Dry ice or liquid nitrogen could possibly be used to cool the reinforcement spacer.

In another embodiment the axial bearing mount location comprises a cylindrical groove perpendicular to the intermediate stage axis. In other words, the cylindrical groove has an axis of symmetry that is identical with the intermediate stage axis. The axial bearing mounting location comprises a cylindrical outer wall that is coaxial with the intermediate stage axis. The reinforcement spacer is configured for reinforcing the cylindrical outer wall. This embodiment may be beneficial because it may reduce the risk that the material or metal forming the axial bearing mounting location fails due to mechanical failure or fatigue.

In another embodiment the reinforcement spacer comprises a tube-shaped portion that is configured for fitting into the cylindrical outer wall and is configured for reinforcing the cylindrical outer wall.

In another embodiment the axial roller bearing has a first largest diameter. The single-row tapered roller bearing has a second largest diameter. The second largest diameter is larger than the first largest diameter. This may be beneficial because the axial forces may be spread out on a larger area on the single-row tapered roller bearing then they are on the axial roller bearing. This may result in the single-row tapered roller bearing having a longer useful life than the axial roller bearing.

The axial roller bearing is configured for balancing axial forces on the output of the intermediate stage. The cylindrical roller bearing is configured for balancing gyroscopic forces on the output of the intermediate stage. The output of the intermediate stage could for example be a shaft or a portion of the second planetary gear. The single-row tapered roller bearing is configured for balancing both the axial forces on the output of the intermediate stage and the gyroscopic forces on the intermediate stage output. This embodiment may be beneficial because a single bearing can be used in the place where two were used before. During a retrofit or rebuild this may reduce the amount of labor necessary to rebuild the single-row tapered roller bearing in comparison with rebuilding the two bearings.

In another embodiment the method is applied to a plurality of wind turbines by removing at least a portion of the intermediate stage from one of the plurality of wind turbines. The plurality of wind turbines could for example be a wind farm or a collection of wind farms. The at least a portion of the intermediate stage may comprise the portions of the gearbox that comprise the cylindrical roller bearing, the axial roller bearing, the cylindrical roller bearing mounting location, and the axial roller bearing mounting location.

The steps of removing the cylindrical roller bearing, removing the axial roller bearing, and installing the tapered roller bearing are performed on the at least a portion of the intermediate stage removed from the one of the plurality of wind turbines. The method further comprises reinstalling the at least a portion of the intermediate stage removed from the one of the plurality of wind turbines.

In another embodiment the method further comprises removing at least a portion of the intermediate stage from a subsequent wind turbine of the plurality of wind turbines and then installing the at least a portion of the intermediate stage from the one of the plurality of wind turbines in the subsequent wind turbine of the plurality of wind turbines. In this embodiment the at least a portion of the intermediate stage is removed from one wind turbine and then installed into a different one. This may be beneficial because it may provide for a more efficient replacement or rebuilding of the gearbox. One goal would be to have the wind turbines produce as much electricity during the rebuilding process. Several possibilities exist. As one gearbox is removed it may be replaced by a different one. In the meantime the original gearbox which was removed can be rebuilt and then immediately reinstalled into another wind turbine.

In another embodiment the method comprises tracking usage stress of the plurality of wind turbines in a wind turbine usage database. For example, the data regarding the forces experienced by the wind turbine or how many revolutions or the total use of the wind turbine may be stored. This may be useful in determining when the cylindrical roller bearing and the axial roller bearing should be replaced. The method further comprises determining a retrofit order using the wind turbine usage database. The plurality of wind turbines is retrofitted according to the retrofit order. This may be advantageous because the wind turbine which has been used the most may be more likely to fail. By following a retrofit order the chances that a windmill could suffer a catastrophic or serious mechanical malfunction is then reduced.

In another embodiment the wind turbine has an electrical generation capacity greater than 1 MWh per year with a an average wind speed of 6 m/s.

In another aspect the invention provides for a retrofitted wind turbine. The retrofitted wind turbine comprises a gearbox. The gearbox comprises a low-speed stage formed from a first planetary gear. The gearbox further comprises an intermediate stage formed from the second planetary gear. The gearbox further comprises a high-speed stage formed from a parallel axis gear. The low-speed stage is configured for driving the intermediate stage. The intermediate stage is configured for driving the high-speed stage.

The gearbox further comprises a single-row tapered roller bearing mounted at a tapered roller bearing mounting location. The single-row tapered roller bearing is coaxial with an intermediate stage axis. The gearbox further comprises an axial bearing mounting location coaxial with the intermediate stage axis. This embodiment may be beneficial because the retrofitted wind turbine may have reduced amounts of labor and costs associated with maintaining the retrofitted wind turbine in comparison to a wind turbine that still has the cylindrical roller bearing and axial roller bearings installed instead of the single-row tapered roller bearing.

In another embodiment the single-row tapered roller bearing has a second largest diameter. The axial load bearing mounting location has a first largest diameter. The second largest diameter is larger than the first largest diameter. The advantages of this have been previously discussed.

In another embodiment the gearbox further comprises a reinforcement spacer installed into the axial roller bearing mounting location with an interference fit. The axial roller bearing mounting location comprises a cylindrical groove perpendicular to the intermediate stage axis. The axial bearing mounting location comprises a cylindrical outer wall that is coaxial to the intermediate stage axis. The reinforcement spacer is configured for reinforcing the cylindrical outer wall.

In another embodiment the retrofitted wind turbine comprises a yaw control system and/or a pitch control system configured for positioning the retrofitted wind turbine into the wind. That is to say that the top of the wind turbine is rotatable using the yaw control system such that the rotors or blades can be rotated such that they efficiently are rotated by the wind. The pitch control system is able to tip the rotors or blades such that they more efficiently receive the wind power. This has a further benefit of ensuring that the forces on the gearbox are always directed from the low-speed stage towards the high-speed stage. This may be beneficial because it ensures that the forces exerted on the single-row tapered roller bearing comprise a compressive axial component.

### Brief description of the drawings

In the following embodiments of the invention are explained in greater detail, by way of example only, making reference to the drawings in which:
- Fig. 1: illustrates an example of a wind turbine;
- Fig. 2: illustrates an example of a gearbox from a wind turbine before retrofitting;
- Fig. 3: illustrates a portion of the gearbox of Fig. 2 after retrofitting;
- Fig. 4: shows a flow chart which illustrates a method of retrofitting a wind turbine; and
- Fig. 5: illustrates an example of a plurality of wind turbines being retrofitted.

### Detailed Description

Like numbered elements in these figures are either equivalent elements or perform the same function. Elements which have been discussed previously will not necessarily be discussed in later figures if the function is equivalent.

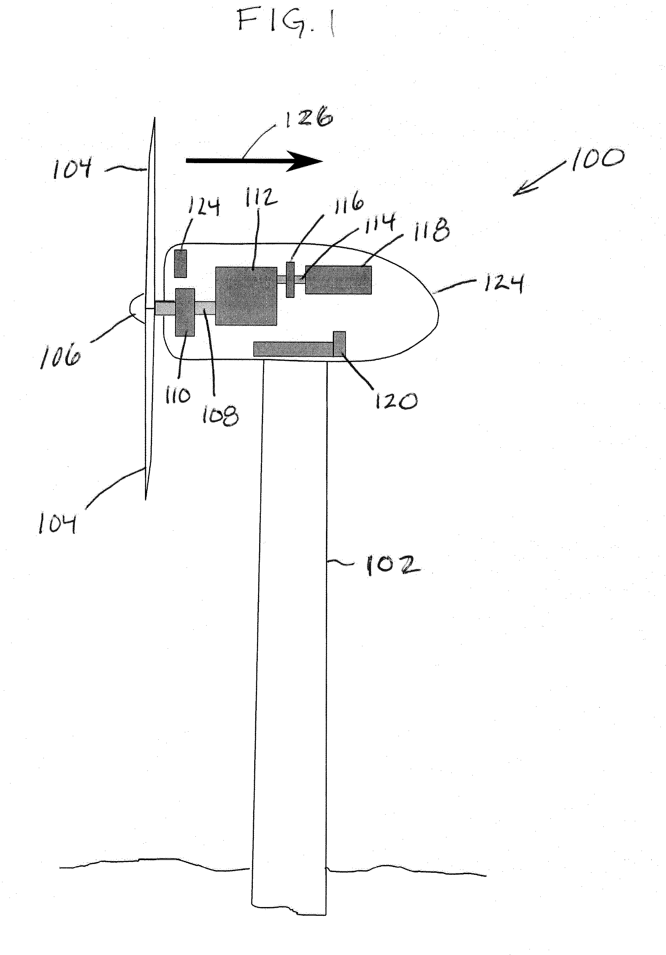

Fig. 1 illustrates an example of a wind turbine 100. The wind turbine 100 comprises a tower 102 which raises the wind turbine 100 above the surface of the earth and into a position where it can receive more wind. The wind turbine 100 comprises a rotor blade 104 that is connected to a hub 106. The hub is connected to a main shaft 108 that is supported by a main shaft bearing 110. The main shaft 108 is sometimes referred to as the low-speed shaft. The main shaft 108 is connected to the gearbox 112.

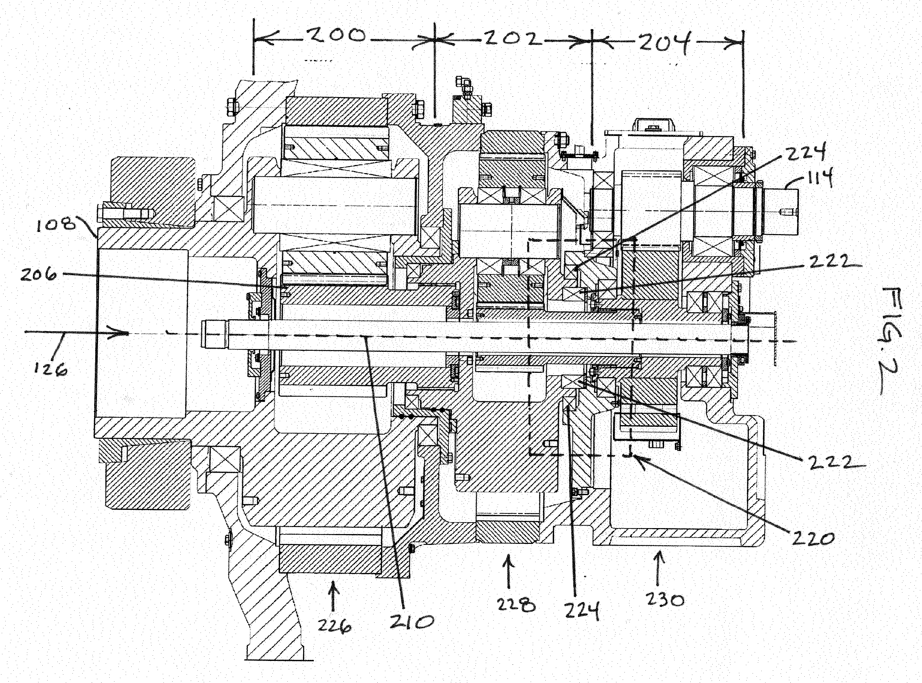

In this case the main shaft 108 will connect to the low-speed stage of the gearbox 112. As is illustrated in Fig. 2 the gearbox comprises three stages, a low-speed stage 200, an intermediate stage 202, and a high-speed stage 204. These stages 200, 202, 204 are used to successively to transform the low-speed high torque rotation of the low-speed or main shaft 108 into a low torque higher speed. The output of the gearbox 112 or the output of the high-speed stage is connected to a high-speed shaft 114. The high-speed shaft 114 drives the generator 118.

There may be several intermediate components between the gearbox 112 and the generator 118. Often times, there is a mechanical brake 116 installed and a mechanical coupling.

The wind turbine 100 is further shown as comprising a yaw control system 120. This is a typically a gear-to-drive system that is used to rotate the orientation of the wind turbine 100 horizontally. The wind turbine 100 is also further shown as containing a pitch control system 122. This controls the pitch or tilt of the wind turbine 100 and can be used to further optimize performance of the wind turbine 100. The majority of the components are housed by a nacelle 124, which encapsulates the wind turbine 100.

The arrow 126 indicates the wind direction when the wind turbine 100 is oriented into the wind. In this case the wind direction 126 is identical with the direction of the axial forces exerted on the gearbox 112. The wind pushes the rotor blades and hub which then pushes the main shaft 108 which exerts axial forces on the gearbox 112.

Fig. 2 shows a cross-sectional view of the gearbox 112. There is a low-speed stage 200 which drives the intermediate stage 202 which then drives the high-speed stage 204.

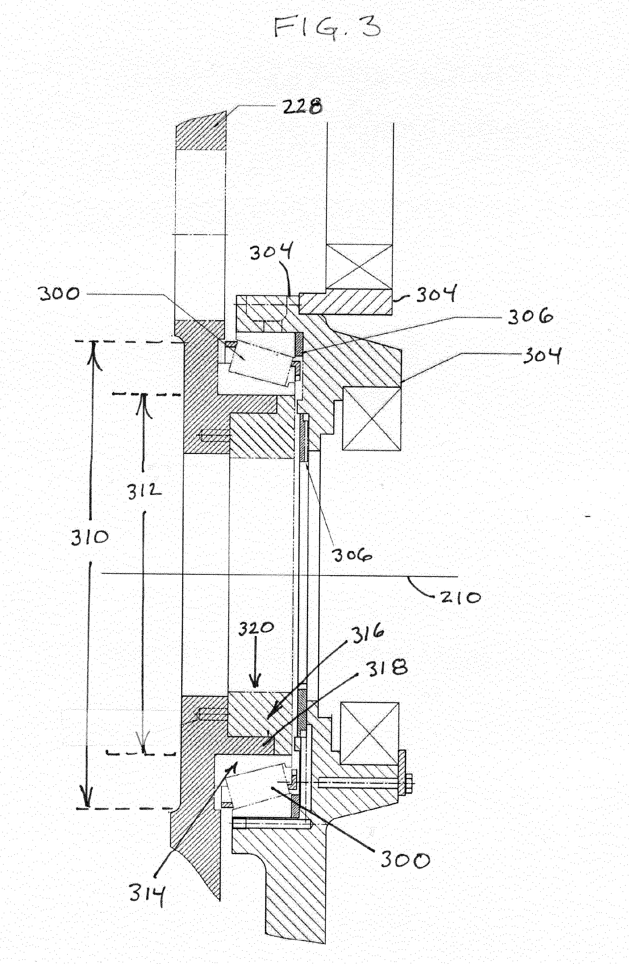

Line 210 indicates the location of the intermediate stage axis 210. The region enclosed by box 220 shows an enlarged region 220 in Fig. 3. Between the intermediate stage 202 and the high-speed stage 204 there is an axial roller bearing 222 and a cylindrical roller bearing 224.

The low-speed stage 200 is formed from a first planetary gear 226. The intermediate stage 202 is formed from a second planetary gear 228. The high-speed stage 204 is formed from a parallel axis gear 230. The first planetary gear 226 comprises a sun gear 206. This results in the low speed stage having a floating bearing. Force exerted in direction 126 by the wind on the main shaft 108 is transferred through the sun gear 206 directly to the roller bearing 222 and the cylindrical roller bearing 224.

The planetary gears 226, 228 may in some examples be formed from helical gears. They could be arranged such that a rotation in the main shaft 108 results in an axial thrust in direction 126 along axis 210. This axial thrust may also be transmitted through the sun gear 206 directly to the roller bearing 222 and the cylindrical roller bearing 224.

In Fig. 2 the cylindrical roller bearing and the axial roller bearing have not yet been replaced. Fig. 3 shows the enlarged region 220 after the wind turbine 100 has been retrofitted.

Fig. 3 shows the enlarged region 220 after the retrofit. A single-row tapered roller bearing 300 is visible. The place where the axial roller bearing 222 was has been replaced with a reinforcement spacer 302. The single-row tapered roller bearing 300 is a bearing between the second planetary gear 228 and the housing 308 of the gearbox 112. There are also several leveling rings 306 visible. It can be seen that the single-row tapered roller bearing 300 has a largest bearing diameter or second largest diameter 310 that is bigger than a largest axial roller bearing mounting location diameter or first largest diameter 312 where the leveling ring 306 is currently mounted. The second largest diameter 310 is bigger than the first largest diameter 312. The contact surface area of the single-row tapered roller bearing 300 may therefore be larger than the contact surface area of the axial roller bearing 222. This may result in the single-row tapered roller bearing 300 having a longer life expectancy than the axial roller bearing. The contact surface area as used herein is the effective surface area of the roller bearings that contacts an opposing surface.

The single-row tapered roller bearing 300 is mounted in a tapered roller bearing mounting location 314. The reinforcement spacer 302 is mounted in an axial roller bearing mounting location 316. In Fig. 2 the cylindrical roller bearing 224 was originally mounted in a cylindrical roller bearing mounting location. However, this was machined to provide the current tapered roller bearing mounting location 314. For, example the machining could be performed using a lathe. The production of the tapered roller bearing mounting location 314 may weaken a cylindrical outer wall 318 that is between the tapered roller bearing mounting location 314 and the axial roller bearing mounting location 316. The purpose of the reinforcement spacer 302 is to reinforce the cylindrical outer wall 318. Otherwise the large forces exerted on the single-row tapered roller bearing 300 could cause the cylindrical outer wall 318 to fail or experience metal fatigue. The reinforcement spacer 302 has a tube-shaped portion 320 that abuts the cylindrical outer wall 318 and reinforces it.

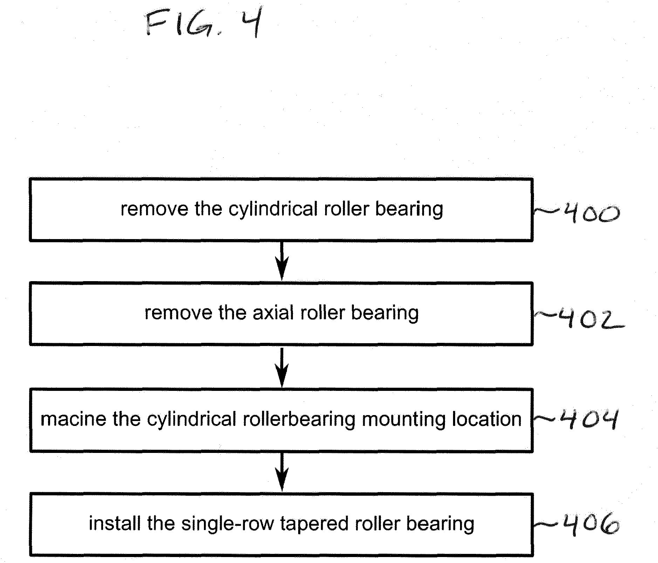

Fig. 4 shows a flowchart which illustrates a method of retrofitting the wind turbine 100. First, in step 400, the cylindrical roller bearing 224 is removed from the cylindrical roller bearing mounting location. Next, in step 402, the axial roller bearing 222 is removed from the axial bearing mounting location 316. Next, optional step 404 is performed. In some cases, it may be beneficial to enlarge the axial bearing mounting location to produce the tapered roller bearing mounting location 314. After step 404 is optionally performed the method proceeds to step 406. In step 406 a single-row tapered roller bearing 300 is installed in the tapered roller bearing mounting location 314.

In some cases there may be additional steps such as removing the gearbox from the wind turbine. In other cases, the method of retrofitting is performed without removing the gearbox from the wind turbine and a technician or engineer does the retrofitting in place.

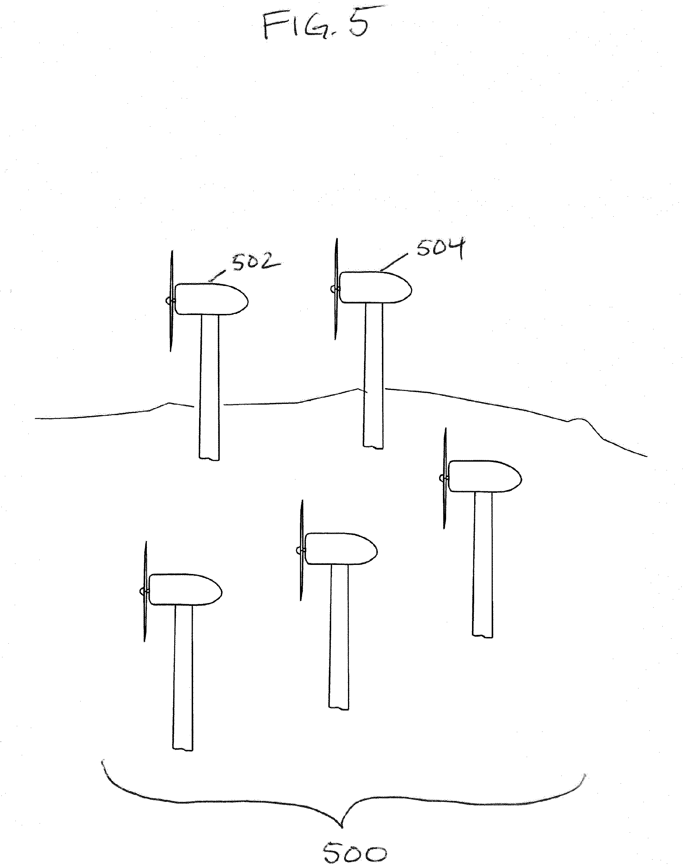

Fig. 5 shows a plurality of wind turbines 500. This plurality of wind turbines 500 could for example represent a wind farm or a collection of wind farms at different locations. When upgrading or retrofitting a wind turbine it may be desirable to have as many wind turbines operating during the retrofitting process to maximize the production of electricity. If all of the wind turbines are stopped or if they are stopped for a longer period of time it can mean that the amount of electricity produced by the plurality of wind turbines 500 during the retrofitting is reduced.

To minimize the amount of lost electricity, a pipeline process can be used during the collective retrofitting of the plurality of wind turbines. For example, at least a portion of the intermediate stage from one of the plurality of wind turbines 500 may be removed. This for example could be a complete gearbox or just a portion of the gearbox that comprises the components which will have the retrofit performed on them. One option would be to perform the retrofit on the at least a portion of the intermediate stage of the gearbox and then reinstall it back into the one of the plurality of wind turbines 502 (the wind turbine from which it was originally taken).

Other options also exist. For example, the at least a portion of the intermediate stage could be removed from the wind turbine 502 and it could be sent off to have it retrofitted at a factory or different location. When the modified parts for the gearbox return they could of course be reinstalled back into the same wind turbine 502 or installed into a subsequent wind turbine 504. A gearbox removed from a wind turbine does not necessarily need to be installed back into the same wind turbine if multiple wind turbines contain compatible gearboxes.

If many of the plurality of wind turbines 500 are in need of a retrofit there may be a danger that one of the plurality 500 experiences a failure of the axial roller bearing 222 or the cylindrical roller bearing 224 before a retrofit can take place. To hopefully avoid this, a wind turbine usage database can be established. Data regarding how much each of the plurality 500 has been used can be stored and an estimate as to which of the plurality 500 has experienced the most wear and tear can be used to determine a retrofit order. This retrofit order can then be used to decide which of the plurality 500 of wind turbines should be retrofitted first.

### List of reference numerals

- 100: wind turbine
- 102: tower
- 104: rotor blade
- 106: hub
- 108: main shaft
- 110: main shaft bearing
- 112: gearbox
- 114: high-speed shaft
- 116: optional mechanical break
- 118: generator
- 120: yaw control system
- 122: pitch control system
- 124: nacelle
- 126: wind direction / direction of axial forces
- 200: low-speed stage
- 202: intermediate stage
- 204: high-speed stage
- 206: sun gear
- 210: intermediate stage axis
- 220: enlarged region
- 222: axial roller bearing
- 224: cylindrical roller bearing
- 226: first planetary gear
- 228: second planetary gear
- 230: parallel axis gear
- 300: single-row tapered roller bearing
- 302: reinforcement spacer
- 304: housing
- 306: leveling ring
- 310: a second largest diameter
- 312: a first largest diameter
- 314: tapered roller bearing mounting location
- 316: axial roller bearing mounting location
- 318: cylindrical outer wall
- 320: tube shaped portion
- 400: removing the cylindrical roller bearing from the cylindrical roller bearing mounting location
- 402: removing the axial roller bearing from the axial bearing mounting location
- 404: machining the cylindrical roller bearing mounting location to provide the tapered roller bearing mounting location
- 406: installing a single-row tapered roller bearing at a tapered roller bearing mounting location
- 500: plurality of wind turbines
- 502: one of the plurality of wind turbines
- 504: subsequent wind turbine

## Claims

1. A method of retrofitting a wind turbine (100, 502, 504), wherein the wind turbine comprises a gearbox (112), wherein the gearbox comprises a low-speed stage (200) formed from a first planetary gear (226), wherein the gearbox further comprises an intermediate stage (202) formed from a second planetary gear (228), wherein the gearbox further comprises a high-speed stage (204) formed from a parallel axis gear (230), wherein the low-speed stage is configured for driving the intermediate stage, wherein the intermediate stage is configured for driving the high-speed stage, wherein the gearbox further comprises a cylindrical roller bearing (224) between the intermediate stage and the high-speed stage, wherein the gearbox further comprises an axial roller bearing (222) between the intermediate stage and the high-speed stage, wherein the cylindrical roller bearing and the axial roller bearing are coaxial with an intermediate stage axis, wherein the cylindrical roller bearing is attached at a cylindrical roller bearing mounting location, wherein the axial roller bearing is attached at an axial roller bearing mounting location (316), wherein the method comprises:
- removing (400) the cylindrical roller bearing from the cylindrical roller bearing mounting location;
- removing (402) the axial roller bearing from the axial bearing mounting location; and
- installing (406) a single-row tapered roller (300) bearing at a tapered roller bearing mounting location (314), wherein the tapered roller bearing mounting location at least partially comprises the cylindrical roller bearing mounting location.

2. The method of claim 1, wherein the cylindrical roller bearing mounting location and the axial roller bearing mounting location are attached to an intermediate stage output; wherein the method further comprises machining (404) the cylindrical roller bearing mounting location to provide the tapered roller bearing mounting location; wherein the single-row tapered roller bearing preferably has a narrow end orientated towards the high speed stage, and wherein the gearbox is preferably configured such that it generates an axial force at the output of the intermediate stage, along the intermediate stage from the high-speed stage, and in a direction traveling from the low speed stage towards the intermediate stage in response to a rotation of the high-speed stage.

3. The method of claim 1 or 2, wherein the method further comprises installing a reinforcement spacer in the axial roller bearing mounting location.

4. The method of claim 3, wherein the reinforcement spacer is installed using an interference fit.

5. The method of claim 3 or 4, wherein the axial bearing mounting location comprises a cylindrical groove perpendicular to the intermediate stage axis, wherein the axial bearing mounting location comprises a cylindrical outer wall (318) that is coaxial with the intermediate stage axis, wherein the reinforcement spacer is configured for reinforcing the cylindrical outer wall.

6. The method of claim 5, wherein the reinforcement spacer comprises a tube shaped portion (320) configured for reinforcing the cylindrical outer wall.

7. The method of any one of the preceding claims, wherein the axial roller bearing has a first largest diameter (312), wherein the single-row tapered roller bearing has a second largest diameter, wherein the second largest diameter is larger than the first largest diameter.

8. The method of any one of the preceding claims, wherein the axial roller bearing is configured for balancing axial forces on the intermediate stage output, wherein the cylindrical roller bearing is configured for balancing gyroscopic forces on the intermediate stage output, wherein the single-row tapered roller bearing is configured for balancing both the axial forces on the intermediate stage output and the gyroscopic forces on the intermediate stage output.

9. The method of any one of the preceding claims, wherein the method is applied to a plurality of wind turbines (500) by removing at least a portion of the intermediate stage from one of the plurality of wind turbines; whereby the steps of removing (400) the cylindrical roller bearing, removing (402) the axial roller bearing, and installing (406) the tapered roller bearing are performed on the at least a portion of the intermediate stage removed from the one of the plurality of wind turbines, wherein the method further comprises reinstalling the at least a portion of the intermediate stage removed from the one of the plurality of wind turbines.

10. The method of claim 9, wherein the method further comprises:
- removing at least a portion of the intermediate stage from a subsequent wind turbine of the plurality of wind turbines; and
- installing the at least a portion of the intermediate stage from the one of the plurality of wind turbines in the subsequent wind turbine of the plurality of wind turbines.

11. The method of claim 9 or 10, wherein the method comprises:
- tracking usage stress of the plurality of wind turbines in a wind turbine usage database, and
- determining a retrofit order using the wind turbine usage database, wherein the plurality of wind turbines is retrofitted according to the retrofit order.

12. A wind turbine (100) retrofitted according to the method of claim 1, wherein the retrofitted wind turbine comprises a gearbox (112), wherein the gearbox comprises a low-speed stage formed (200) from a first planetary gear (226), wherein the gearbox further comprises an intermediate stage (202) formed from a second planetary gear (228), wherein the gearbox further comprises a high-speed stage (204) formed from a parallel axis gear (230), wherein the low-speed stage is configured for driving the intermediate stage, wherein the intermediate stage is configured for driving the high-speed stage, wherein the gearbox further comprises a single-row tapered roller bearing mounted at a tapered roller bearing mounting location between the intermediate stage and the high-speed stage, wherein the single-row tapered roller bearing is coaxial with an intermediate stage axis, wherein the gearbox further comprises an axial roller bearing mounting location coaxial with the intermediate stage axis and arranged between the intermediate stage and the high-speed stage.

13. The retrofitted wind turbine of claim 12, wherein the single-row tapered roller bearing has a second largest diameter (310), wherein the axial roller bearing mounting location has a first largest diameter (312), wherein the second largest bearing diameter is larger than the first largest diameter.

14. The retrofitted wind turbine of claim 12 or 13, wherein the gearbox further comprises a reinforcement spacer installed in the axial roller bearing mounting location with an interference fit, wherein the axial bearing mounting location is a cylindrical groove perpendicular to the intermediate stage axis, wherein the axial bearing mounting location comprises a cylindrical outer wall (318) that is coaxial with the intermediate stage axis, and wherein the reinforcement spacer is configured for reinforcing the cylindrical outer wall.

15. The retrofitted wind turbine of claim 12, 13, or 14, wherein the retrofitted wind turbine comprises a yaw control system (120) and/or a pitch control system (122) configured for positioning the wind turbine into the wind.

## Patentansprüche

1. Verfahren zum Nachrüsten einer Windturbine (100, 502, 504), wobei die Windturbine ein Getriebe (112) umfasst, wobei das Getriebe eine niedrigdrehende Stufe (200) umfasst, die von einem ersten Planetentrieb (226) gebildet wird, wobei das Getriebe ferner eine Zwischenstufe (202) umfasst, die von einem zweiten Planetentrieb (228) gebildet wird, wobei das Getriebe ferner eine hochdrehende Stufe (204) umfasst, die von einem Stirnradgetriebe (230) gebildet wird, wobei die niedrigdrehende Stufe zum Antreiben der Zwischenstufe eingerichtet ist, wobei die Zwischenstufe zum Antreiben der hochdrehenden Stufe eingerichtet ist, wobei das Getriebe ferner ein Zylinderrollenlager (224) zwischen der Zwischenstufe und der hochdrehenden Stufe umfasst, wobei das Getriebe ferner ein Axialrollenlager (222) zwischen der Zwischenstufe und der hochdrehenden Stufe umfasst, wobei das Zylinderrollenlager und das Axialrollenlager koaxial sind mit einer Zwischenstufenachse, wobei das Zylinderrollenlager an einer Zylinderrollenlager-Montagestelle angebracht ist, wobei das Axialrollenlager an einer Axialrollenlager-Montagestelle (316) angebracht ist, wobei das Verfahren umfasst:
- Entfernen (400) des Zylinderrollenlagers von der Zylinderrollenlager-Montagestelle;
- Entfernen (402) des Axialrollenlagers von der Axialrollenlager-Montagestelle; und
- Installieren (406) eines einreihigen Kegelrollenlagers (300) an einer Kegelrollenlager-Montagestelle (314), wobei die Kegelrollenlager-Montagestelle zumindest teilweise die Zylinderrollenlager-Montagestelle umfasst.

2. Verfahren nach Anspruch 1, wobei die Zylinderrollenlager-Montagestelle und die Axialrollenlager-Montagestelle an einem Zwischenstufenausgang angebracht sind; wobei das Verfahren ferner eine maschinelle Bearbeitung (404) der Zylinderrollenlager-Montagestelle umfasst, um die Kegelrollenlager-Montagestelle bereitzustellen; wobei das einreihige Kegelrollenlager vorzugsweise ein schmales Ende aufweist, das zu der hochdrehenden Stufe hin ausgerichtet ist, und wobei das Getriebe vorzugsweise so eingerichtet ist, dass es eine Axialkraft am Ausgang der Zwischenstufe, längs der Zwischenstufe von der hochdrehenden Stufe, und in einer Richtung, die von der niedrigdrehenden Stufe zu der Zwischenstufe hin verläuft, als Reaktion auf eine Drehung der hochdrehenden Stufe erzeugt.

3. Verfahren nach Anspruch 1 oder 2, wobei das Verfahren ferner ein Installieren eines Bewehrungs-Abstandshalters an der Axialrollenlager-Montagestelle umfasst.

4. Verfahren nach Anspruch 3, wobei der Bewehrungs-Abstandshalter anhand einer Presspassung installiert wird.

5. Verfahren nach Anspruch 3 oder 4, wobei die Axialrollenlager-Montagestelle eine zylindrische Nut umfasst, die senkrecht ist zu der Zwischenstufenachse, wobei die Axialrollenlager-Montagestelle eine zylindrische Außenwand (318) umfasst, die koaxial ist zu der Zwischenstufenachse, wobei der Bewehrungs-Abstandshalter eingerichtet ist, die zylindrische Außenwand zu verstärken.

6. Verfahren nach Anspruch 5, wobei der Bewehrungs-Abstandshalter einen rohrförmigen Abschnitt (320) umfasst, der eingerichtet ist, die zylindrische Außenwand zu verstärken.

7. Verfahren nach einem der vorangehenden Ansprüche, wobei das Axialrollenlager einen ersten größten Durchmesser (312) aufweist, wobei das einreihige Kegelrollenlager einen zweiten größten Durchmesser aufweist, wobei der zweite größte Durchmesser größer ist als der erste größte Durchmesser.

8. Verfahren nach einem der vorangehenden Ansprüche, wobei das Axialrollenlager eingerichtet ist, Axialkräfte an dem Zwischenstufenausgang auszugleichen, wobei das Zylinderrollenlager eingerichtet ist, Kreiselkräfte an dem Zwischenstufenausgang auszugleichen, wobei das einreihige Kegelrollenlager eingerichtet ist, sowohl die Axialkräfte an dem Zwischenstufenausgang als auch die Kreiselkräfte an dem Zwischenstufenausgang auszugleichen.

9. Verfahren nach einem der vorangehenden Ansprüche, wobei das Verfahren so auf eine Mehrzahl von Windturbinen (500) angewendet wird, dass zumindest ein Abschnitt der Zwischenstufe von einer von der Mehrzahl von Windturbinen entfernt wird; wobei die Schritte des Entfernens (400) des Zylinderrollenlagers, des Entfernens (402) des Axialrollenlagers und des Installierens (406) des Kegelrollenlagers an zumindest dem Abschnitt der Zwischenstufe, der von der einen von der Mehrzahl von Windturbinen entfernt wurde, durchgeführt werden, wobei das Verfahren ferner umfasst, dass zumindest der Abschnitt der Zwischenstufe, der von der einen von der Mehrzahl von Windturbinen entfernt wurde, erneut installiert wird.

10. Verfahren nach Anspruch 9, wobei das Verfahren ferner umfasst:
- Entfernen zumindest eines Abschnitts der Zwischenstufe von einer nächsten Windturbine von der Mehrzahl von Windturbinen; und
- Installieren zumindest des Abschnitts der Zwischenstufe der einen von der Mehrzahl von Windturbinen in der nächsten Windturbine von der Mehrzahl von Windturbinen.

11. Verfahren nach Anspruch 9 oder 10, wobei das Verfahren umfasst:
- Nachverfolgen einer Nutzungsbeanspruchung der Mehrzahl von Windturbinen in einer Windturbinennutzungsdatenbank, und
- Bestimmen einer Nachrüstungsreihenfolge unter Verwendung der Windturbinennutzungsdatenbank, wobei die Mehrzahl von Windturbinen gemäß der Nachrüstungsreihenfolge nachgerüstet werden.

12. Windturbine (100), nachgerüstet gemäß dem Verfahren nach Anspruch 1, wobei die nachgerüstete Windturbine ein Getriebe (112) umfasst, wobei das Getriebe eine niedrigdrehende Stufe (200) umfasst, die von einem ersten Planetentrieb (226) gebildet wird, wobei das Getriebe ferner eine Zwischenstufe (202) umfasst, die von einem zweiten Planetentrieb (228) gebildet wird, wobei das Getriebe ferner eine hochdrehende Stufe (204) umfasst, die von einem Stirnradgetriebe (230) gebildet wird, wobei die niedrigdrehende Stufe zum Antreiben der Zwischenstufe eingerichtet ist, wobei die Zwischenstufe zum Antreiben der hochdrehenden Stufe eingerichtet ist, wobei das Getriebe ferner ein einreihiges Kegelrollenlager umfasst, das an einer Kegelrollenlager-Montagestelle zwischen der Zwischenstufe und der hochdrehenden Stufe montiert ist, wobei das einreihige Kegelrollenlager koaxial ist mit einer Zwischenstufenachse, wobei das Getriebe ferner eine Axialrollenlager-Montagestelle umfasst, die koaxial ist mit der Zwischenstufenachse und die zwischen der Zwischenstufe und der hochdrehenden Stufe angeordnet ist.

13. Nachgerüstete Windturbine nach Anspruch 12, wobei das einreihige Kegelrollenlager einen zweiten größten Durchmesser (310) umfasst, wobei die Axialrollenlager-Montagestelle einen ersten größten Durchmesser (312) umfasst, wobei der zweite größte Durchmesser größer ist als der erste größte Durchmesser.

14. Nachgerüstete Windturbine nach Anspruch 12 oder 13, wobei das Getriebe ferner einen Bewehrungs-Abstandshalter umfasst, der mit einer Presspassung an der Axialrollenlager-Montagestelle installiert ist, wobei die Axialrollenlager-Montagestelle eine zylindrische Nut ist, die senkrecht ist zu der Zwischenstufenachse, wobei die Axialrollenlager-Montagestelle eine zylindrische Außenwand (318) umfasst, die koaxial ist zu der Zwischenstufenachse, und wobei der Bewehrungs-Abstandshalter eingerichtet ist, die zylindrische Außenwand zu verstärken.

15. Nachgerüstete Windturbine nach Anspruch 12, 13 oder 14, wobei die nachgerüstete Windturbine ein Windrichtungsnachführsystem (120) und/oder ein Ausstellwinkelsteuersystem (122) umfasst, die eingerichtet sind, die Windturbine im Wind zu positionieren.

## Revendications

1. Procédé de rénovation d'une éolienne (100, 502, 504), dans lequel l'éolienne comprend une boîte de vitesses (112), dans lequel la boîte de vitesses comprend un étage de basse vitesse (200) formé à partir d'un premier train épicycloïdal (226), dans lequel la boîte de vitesses comprend en outre un étage intermédiaire (202) formé à partir d'un second train épicycloïdal (228), dans lequel la boîte de vitesse comprend en outre un étage de haute vitesse (204) formé à partir d'un train axial parallèle (230), dans lequel l'étage de basse vitesse est conçu pour entraîner l'étage intermédiaire, dans lequel l'étage intermédiaire est conçu pour entraîner l'étage de haute vitesse, dans lequel la boîte de vitesses comprend en outre un roulement à rouleaux cylindriques (224) entre l'étage intermédiaire et l'étage de haute vitesse, dans lequel la boîte de vitesses comprend en outre un roulement à rouleaux axiaux (222) entre l'étage intermédiaire et l'étage de haute vitesse, dans lequel le roulement à rouleaux cylindriques et le roulement à rouleaux axiaux sont coaxiaux avec un axe d'étage intermédiaire, dans lequel le roulement à rouleaux cylindriques est fixé au niveau d'un emplacement de montage de roulement à rouleaux cylindriques, dans lequel le roulement à rouleaux axiaux est fixé au niveau d'un emplacement de montage de roulement à rouleaux axiaux (316), dans lequel le procédé comprend :
- le retrait (400) du roulement à rouleaux cylindriques de l'emplacement de montage de roulement à rouleaux cylindriques ;
- le retrait (402) du roulement à rouleaux axiaux de l'emplacement de montage de roulement à rouleaux axiaux ;
et
- l'installation (406) d'un roulement à rouleaux coniques en une seule rangée (300) au niveau d'un emplacement de montage de roulement à rouleaux coniques (314), dans lequel l'emplacement de montage de roulement à rouleaux coniques comprend au moins partiellement l'emplacement de montage de roulement à rouleaux cylindriques.

2. Procédé selon la revendication 1, dans lequel l'emplacement de montage de roulement à rouleaux cylindriques et l'emplacement de montage de roulement à rouleaux axiaux sont fixés à une sortie d'étage intermédiaire ; dans lequel le procédé comprend en outre l'usinage (404) de l'emplacement de montage de roulement à rouleaux cylindriques pour fournir l'emplacement de montage de roulement à rouleaux coniques ; dans lequel le roulement à rouleaux coniques en une seule rangée a préférentiellement une extrémité étroite orientée vers l'étage de haute vitesse, et dans lequel la boîte de vitesses est préférentiellement conçue de sorte à générer une force axiale au niveau de la sortie de l'étage intermédiaire, le long de l'étage intermédiaire à partir de l'étage de haute vitesse, et dans une direction allant de l'étage de basse vitesse vers l'étage intermédiaire en réponse à une rotation de l'étage de haute vitesse.

3. Procédé selon la revendication 1 ou 2, dans lequel le procédé comprend en outre l'installation d'un espaceur de renfort dans l'emplacement de montage de roulement à rouleaux axiaux.

4. Procédé selon la revendication 3, dans lequel l'espaceur de renfort est installé en utilisant un ajustement serré.

5. Procédé selon la revendication 3 ou 4, dans lequel l'emplacement de montage de roulement axial comprend une rainure cylindrique perpendiculaire à l'axe de l'étage intermédiaire, dans lequel l'emplacement de montage de roulement axial comprend une paroi externe cylindrique (318) qui est coaxiale vis-à-vis de l'axe de l'étage intermédiaire, dans lequel l'espaceur de renfort est conçu pour le renforcement de la paroi externe cylindrique.

6. Procédé selon la revendication 5, dans lequel l'espaceur de renfort comprend une partie en forme de tube (320) conçue pour le renforcement de la paroi externe cylindrique.

7. Procédé selon l'une quelconque des revendications précédentes, dans lequel le roulement à rouleaux axiaux a un premier diamètre le plus grand (312) dans lequel le roulement à rouleaux coniques en une seule rangée a un second diamètre le plus grand, dans lequel le second diamètre le plus grand est plus grand que le premier diamètre le plus grand.

8. Procédé selon l'une quelconque des revendications précédentes, dans lequel le roulement à rouleaux axiaux est conçu pour l'équilibrage des forces axiales sur la sortie de l'étage intermédiaire, dans lequel le roulement à rouleaux cylindriques est conçu pour l'équilibrage des forces gyroscopiques sur la sortie de l'étage intermédiaire, dans lequel le roulement à rouleaux coniques en une seule rangée est conçu pour l'équilibrage à la fois des forces axiales sur la sortie de l'étage intermédiaire et des forces gyroscopiques sur la sortie de l'étage intermédiaire.

9. Procédé selon l'une quelconque des revendications précédentes, dans lequel le procédé est appliqué à une pluralité d'éoliennes (500) en retirant au moins une partie de l'étage intermédiaire de l'une parmi la pluralité d'éoliennes ; moyennant quoi les étapes de retrait (400) du roulement à rouleaux cylindriques, de retrait (402) du roulement à rouleaux axiaux et d'installation (406) du roulement à rouleaux coniques sont réalisées sur l'au moins une partie de l'étage intermédiaire retiré de l'une parmi la pluralité d'éoliennes, dans lequel le procédé comprend en outre la réinstallation de l'au moins une partie de l'étage intermédiaire retirée de l'une parmi la pluralité d'éoliennes.

10. Procédé selon la revendication 9, dans lequel le procédé comprend en outre :
- le retrait d'au moins une partie de l'étage intermédiaire depuis une éolienne suivante de la pluralité d'éoliennes ; et
- l'installation de l'au moins une partie de l'étage intermédiaire depuis l'une de la pluralité d'éoliennes dans l'éolienne suivante de la pluralité d'éoliennes.

11. Procédé selon la revendication 9 ou 10, dans lequel le procédé comprend :
- le suivi des contraintes d'usage de la pluralité d'éoliennes dans une base de données d'usage d'éoliennes, et
- la détermination d'un ordre de rénovation en utilisant la base de données d'usage d'éoliennes, dans lequel la pluralité d'éoliennes est rénovée selon l'ordre de rénovation.

12. Éolienne (100) rénovée selon le procédé de la revendication 1, dans laquelle l'éolienne rénovée comprend une boîte de vitesses (112), dans laquelle la boîte de vitesses comprend un étage de basse vitesse (200) formé à partir d'un premier train épicycloïdal (226), dans laquelle la boîte de vitesses comprend en outre un étage intermédiaire (202) formé à partir d'un second train épicycloïdal (228), dans laquelle la boîte de vitesses comprend en outre un étage de haute vitesse (204) formé à partir d'un train axial parallèle (230), dans laquelle l'étage de basse vitesse est conçu pour entraîner l'étage intermédiaire, dans laquelle l'étage intermédiaire est conçu pour entraîner l'étage de haute vitesse, dans laquelle la boîte de vitesses comprend en outre un roulement à rouleaux coniques en une seule rangée monté au niveau d'un emplacement de montage de roulement à rouleaux coniques entre l'étage intermédiaire et l'étage de haute vitesse, dans laquelle le roulement à rouleaux coniques en une seule rangée est coaxial vis-à-vis d'un axe de l'étage intermédiaire, dans laquelle la boîte de vitesses comprend en outre un emplacement de montage de roulement à rouleaux axiaux coaxial vis-à-vis de l'axe de l'étage intermédiaire et disposé entre l'étage intermédiaire et l'étage de haute vitesse.

13. Éolienne rénovée selon la revendication 12, dans laquelle le roulement à rouleaux coniques en une seule rangée a un second diamètre le plus grand (310), dans laquelle l'emplacement de montage de roulement à rouleaux axiaux a un premier diamètre le plus grand (312), dans laquelle le second diamètre de roulement le plus grand est supérieur au premier diamètre le plus grand.

14. Éolienne rénovée selon la revendication 12 ou 13, dans laquelle la boîte de vitesses comprend en outre un espaceur de renfort installé dans l'emplacement de montage de roulement à rouleaux axiaux avec un ajustement serré, dans laquelle l'emplacement de montage de roulement axial est une rainure cylindrique perpendiculaire à l'axe de l'étage intermédiaire, dans lequel l'emplacement de montage de roulement axial comprend une paroi externe cylindrique (318) qui est coaxiale vis-à-vis de l'axe de l'étage intermédiaire, et dans laquelle l'espaceur de renfort est conçu pour le renforcement de la paroi externe cylindrique.

15. Éolienne rénovée selon la revendication 12, 13 ou 14, dans laquelle l'éolienne rénovée comprend un système de contrôle de lacets (120) et/ou un système de contrôle de tangage (122) conçus pour le positionnement de l'éolienne dans le vent.
